# FASCICULE DE BREVET EUROPEEN

(11) **EP 3 471 858 B1**
(45) Date de publication et mention de la délivrance du brevet: **18.03.2020**
(21) Numéro de dépôt: 17735205.1
(22) Date de dépôt: 12.06.2017
(51) Int. Cl.: B01D 53/00, B01D 53/22, F25J 3/06

(54) **APPAREIL ET PROCÉDÉ DE SÉPARATION DE CO2 À BASSE TEMPÉRATURE COMPRENANT UNE ÉTAPE DE SÉPARATION PAR PERMÉATION**
VORRICHTUNG UND VERFAHREN ZUR ABSCHEIDUNG VON CO2 BEI NIEDRIGER TEMPERATUR MIT EINEM ABSCHEIDUNGSSCHRITT DURCH PERMEATION
APPARATUS AND METHOD FOR SEPARATING CO2 AT LOW TEMPERATURE COMPRISING A STEP OF SEPARATION BY PERMEATION

(30) Priorité: 16.06.2016 FR 1655601
(43) Date de publication de la demande: 24.04.2019
(73) Titulaire: L'Air Liquide Société Anonyme pour l'Etude et l'Exploitation des Procédés Georges Claude, 75007 Paris (FR)
(72) Inventeur: GRANADOS, Ludovic, 92800 Puteaux (FR); LECLERC, Mathieu, 75020 Paris (FR); LOCKWOOD, Frederick, 75010 Paris (FR); TERRIEN, Paul, Newton, MA 02459 (US)
(74) Mandataire: Mercey, Fiona Susan
(86) Numéro de dépôt international: PCT/FR2017/051488
(87) Numéro de publication internationale: WO 2017/216456

(56) Documents cités:
- EP-A1- 1 952 874
- WO-A1-94/04250
- WO-A1-2014/009449
- WO-A1-2014/009643

## Description

La présente invention est relative à un appareil et à un procédé de purification de CO₂ à basse température comprenant une étape de séparation par perméation.

Elle concerne en particulier un procédé de démarrage d'une membrane devant être opérée à basse température dans un appareil de purification de CO₂ à basse température.

La présente invention concerne le traitement des gaz non condensés d'une unité de purification de CO₂ à basse température dans des membranes opérées à de basses températures (<-10°C).

L'invention permet d'épurer un mélange gazeux contenant au moins 30% de dioxyde de carbone, voire au moins 50% de dioxyde de carbone, voire au moins 75% de dioxyde de carbone pour produire un débit enrichi en dioxyde de carbone par rapport au mélange. Les pourcentages cités concernent le mélange gazeux à base sèche, celui-ci contenant très souvent de l'eau.

Tous les pourcentages relatifs à des puretés dans ce document sont des pourcentages molaires.

L'accroissement de la concentration en dioxyde de carbone dans l'atmosphère est en très grande partie la cause du réchauffement global. Le CO₂ d'origine humaine est essentiellement émis dans l'atmosphère par la combustion des combustibles fossiles dans les centrales thermiques et dans un certain nombre d'unités industrielles comme les cimenteries, les unités de production d'hydrogène ou encore les unités de production d'acier.

Dans le cadre de la réduction des émissions de gaz à effet de serre et/ou de la production de CO₂ utilisé pour la récupération assistée du pétrole, une unité de capture et de purification du CO₂ par voie cryogénique peut être employée an aval des installations émettrices de CO₂. La capture et la purification du CO₂ par voie cryogénique sont basées essentiellement sur la condensation partielle du CO₂ à des températures proches de son point triple qui peut être complétée par une ou plusieurs distillations pour augmenter la pureté en CO₂ du produit final.

Pour assurer ces condensations partielles et distillation, on va devoir comprimer les gaz à purifier, les sécher puis les refroidir pour former une phase liquide enrichie en CO₂ et une phase gaz enrichie en gaz incondensables que l'on va séparer dans un ou plusieurs pots de condensation partielle. Grâce à ce genre de procédé, des rendements de capture compris entre 80 et 95% sont atteignables.

Les gaz incondensables sont la plupart du temps réchauffés contre les gaz à purifier qui se refroidissent avant émissions à l'atmosphère. Avant de les émettre à l'air ambiant, on pourra aussi les utiliser pour régénérer les sécheurs de l'unité de capture.

Afin de maximiser le rendement de capture de CO₂, des membranes peuvent aussi être employées sur les gaz incondensables provenant du ou des pots de condensation partielle. Un procédé de ce genre est connu d'EP-A-2404656.

Le perméat des membranes, étant alors chargé en CO₂ et à plus basse pression que les gaz incondensables, peut être recyclé dans la chaine de compression de l'unité de capture. Le CO₂ qui aura ainsi traversé la membrane et qui aura été recyclé au compresseur pourra alors être liquéfié dans le ou les pots de condensation partielle. On peut atteindre des rendements de capture de l'ordre de 99% en couplant le procédé de condensation partielle avec celui des membranes.

Deux paramètres importants permettent le dimensionnement des membranes et de quantifier leur performance : le rendement par membrane et la sélectivité en CO₂. Plus le rendement en CO₂ sera important, moins il sera nécessaire d'ajouter des modules de membranes pour augmenter le rendement global de l'unité. L'investissement initial est alors réduit. Plus la sélectivité en CO₂ sera importante, moins les autres gaz vont traverser la membrane. Une haute sélectivité en CO₂ permet d'obtenir un perméat plus pur en CO₂ et de réduire la consommation en énergie du compresseur de gaz à purifier. En effet, les gaz non condensables qui traversent la membrane sont aussi recyclés à ce compresseur et vont donc augmenter le débit à traiter au sein de ce dernier affectant ainsi sa consommation énergétique. Selon le même concept, la taille du compresseur pourra être réduite si la sélectivité des membranes est augmentée.

Pour optimiser à la fois le rendement et la sélectivité des membranes, les employer à des températures subambiantes, voire (températures <-10°C) peut s'avérer pertinent. Un procédé de ce genre est décrit dans WO-A-2014/009449, EP1952874 et WO-A-2014/009643. On va de la sorte les placer directement en aval du ou des pots de condensation partielles avec ou sans détente des gaz incondensables.

Si la température du pot est trop basse pour assurer le bon fonctionnement et surtout la faisabilité des membranes, on pourra partiellement réchauffer les gaz non condensables avant de les envoyer aux membranes, jusqu'à des températures comprises entre -45 et -10°C. WO2014/009449 et EP1952874 suggèrent de réchauffer tout le gaz provenant du séparateur de phase en amont de la membrane alors que WO-A-2014/009643 ne le chauffe pas.

Toutefois, à la mise en fonctionnement de ces membranes il est nécessaire de contrôler la mise en froid de ces membranes de manière progressive : en effet une alimentation directe des membranes en gaz froid pourrait induire de fortes contraintes mécaniques sur ces équipements et entrainer leur dégradation.

Par ailleurs, il est nécessaire d'assurer un bon contrôle des conditions opératoires de ces membranes (notamment sur la température) pendant le fonctionnement normal pour assurer des rendements optimaux et aussi assurer l'intégrité des matériaux qui composent les membranes.

Selon un objet de l'invention, il est prévu un procédé de séparation d'un mélange contenant du dioxyde de carbone, dans lequel :
i) le mélange est refroidi dans un échangeur de chaleur et partiellement condensé et un premier liquide est séparé du mélange dans un premier système opérant à basse température comprenant au moins un premier séparateur de phases et éventuellement une colonne de séparation du liquide provenant du séparateur de phases et
ii) un gaz issu du premier système est traité dans un système membranaire pour produire un perméat et un non-perméat, le gaz issu du premier système étant divisé en deux parties, une première partie étant envoyée au système membranaire sans avoir été réchauffée dans l'échangeur de chaleur et une deuxième partie étant réchauffée jusqu'à au moins une température intermédiaire de l'échangeur de chaleur, de préférence jusqu'au bout chaud de celui-ci et ensuite envoyée au système membranaire sans avoir été refroidie.

Selon d'autres objets facultatifs :
- le premier système produit un fluide enrichi en CO₂ comme produit final, ce produit pouvant être un liquide, éventuellement pressurisé
- le mélange est épuré par adsorption dans une unité d'adsorption en amont de l'échangeur de chaleur et lors d'une première phase, qui est une phase de démarrage, au moins une partie du gaz issu du premier système est envoyée à l'unité d'adsorption comme gaz de régénération et aucune partie du gaz issu du premier système n'est envoyée au système membranaire et lors d'une phase ultérieure, qui est une phase d'opération stable, suivant la phase de démarrage, au moins une partie du gaz issu du premier système est envoyée au système membranaire et au moins une partie du perméat ou du non-perméat du système membranaire est envoyée à l'unité d'adsorption comme gaz de régénération.

- lors d'une deuxième phase, qui est une phase de démarrage, suivant la première phase, une partie du gaz issu du premier système est réchauffée et puis envoyée au système membranaire et au moins une partie du perméat ou du non-perméat du système membranaire ainsi qu' une partie du gaz issu du premier système sont envoyées à l'unité d'adsorption comme gaz de régénération
- lors d'une première phase, qui est une phase de démarrage, au moins une partie du gaz issu du premier système est envoyée à l'atmosphère et aucune partie du gaz issu du premier système n'est envoyée au système membranaire et lors d'une phase ultérieure, qui est une phase d'opération stable, au moins une partie du gaz issu du premier système est envoyée au système membranaire et au moins une partie du perméat ou du non-perméat du système membranaire est envoyée à l'atmosphère.
- lors de la première phase, au moins une partie du gaz issu du premier système est détendue dans une turbine et ensuite envoyée à l'atmosphère et lors de la phase ultérieure, au moins une partie du non-perméat est détendue dans une turbine et ensuite envoyée à l'atmosphère.
- lors de la première phase, une première partie du gaz issu du premier système est détendue dans la turbine et ensuite envoyée à l'atmosphère et une deuxième partie du gaz issu du premier système est détendue dans un moyen de détente autre que la turbine et ensuite envoyée à l'atmosphère
- lors d'une deuxième phase, qui est une phase de démarrage, suivant la première phase, une partie du gaz issu du premier système est réchauffée et puis envoyée au système membranaire et un autre partie du gaz issu du premier système est envoyée à l'atmosphère, éventuellement après détente dans une turbine
- afin de démarrer le procédé, selon une première phase
   ∘ une vanne envoyant directement le gaz issu du premier système au système membranaire est fermée et tout le gaz est réchauffé dans l'échangeur de chaleur
   ∘ une vanne en entrée du système membranaire est fermée
   ∘ le gaz réchauffé dans l'échangeur de chaleur est séparé en deux parties
      ▪ une partie du gaz réchauffé circule dans un premier circuit de contournement, régulé par une première vanne de contournement, du système membranaire vers une conduite reliée a système membranaire et à l'unité d'adsorption via l'échangeur de chaleur
      ▪ une partie du gaz réchauffé circule dans un deuxième circuit de contournement, régulé par une vanne, qui envoie le reste du gaz vers l'atmosphère optionnellement en passant par l'échangeur de chaleur et/ou par la ou les turbine(s) .
- dans ce dernier cas, le débit étant plus important que le débit nominal de la ou les turbine(s), un circuit de contournement de la ou les turbine(s) est requis si celles-ci n'ont pas été dimensionnées pour traiter ce débit supplémentaire.
- la passe concernée dans l'échangeur qui mène vers la turbine devra être dimensionnée pour traiter ce débit supplémentaire.
- une autre option consiste à démarrer la ou les turbine(s) uniquement après le démarrage complet des membranes. La ou les turbines sont entièrement contournées via une vanne dans ce cas.

Selon un autre objet de l'invention, il est prévu un appareil de séparation d'un mélange contenant du dioxyde de carbone, comprenant :
i) Une unité de séchage par adsorption.
ii) Un échangeur de chaleur.
iii) Un premier système de séparation capable d'opérer à une température inférieure à -10°C comprenant au moins un premier séparateur de phases et éventuellement une colonne de séparation reliée pour recevoir un liquide du premier séparateur de phases.
iv) Une conduite pour envoyer un mélange séché dans l'unité de séchage par adsorption se refroidir dans l'échangeur de chaleur pour former un débit partiellement condensé.
v) Un système membranaire.
vi) Une conduite pour sortir un débit enrichi en dioxyde de carbone du premier système de séparation.
vii) Une conduite pour envoyer un gaz issu du premier système au système membranaire.
viii) Une conduite pour sortir un perméat du système membranaire et une conduite pour sortir un non-perméat du système dans lequel la conduite pour envoyer le gaz issu du premier système au système membranaire est reliée à l'échangeur de chaleur afin de permettre une partie du gaz de se réchauffer jusqu'à au moins une température intermédiaire de l'échangeur de chaleur, de préférence jusqu'au bout chaud de celui-ci, le système membranaire étant relié au premier système par une autre conduite permettant d'envoyer une autre partie du gaz au système membranaire sans avoir été réchauffée dans l'échangeur de chaleur.

Selon d'autres aspects facultatifs, l'appareil comprend :
- des moyens pour envoyer au moins une partie du gaz issu du premier système directement à l'atmosphère, éventuellement après détente.
- des moyens pour envoyer au moins une partie du gaz issu du premier système à l'unité de séchage comme gaz de régénération.

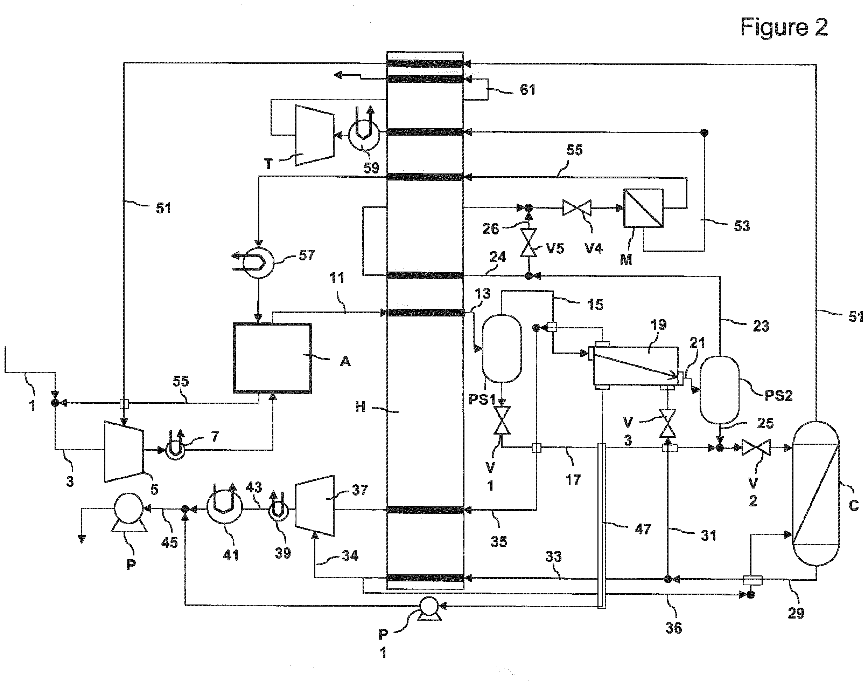

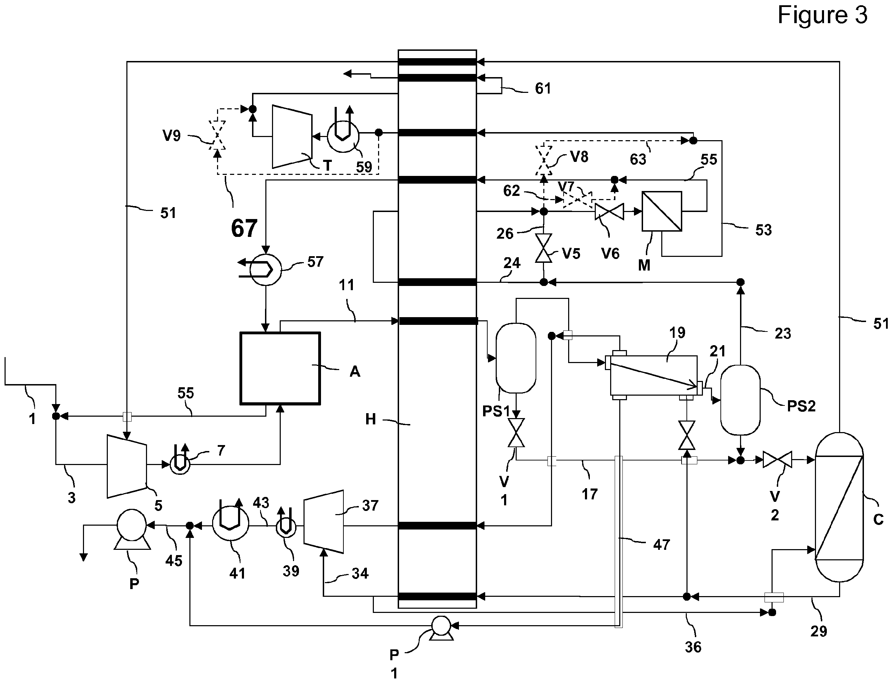

L'invention sera décrite en se référant aux figures 2 et 3 qui illustrent le procédé selon l'invention de manière plus détaillée.

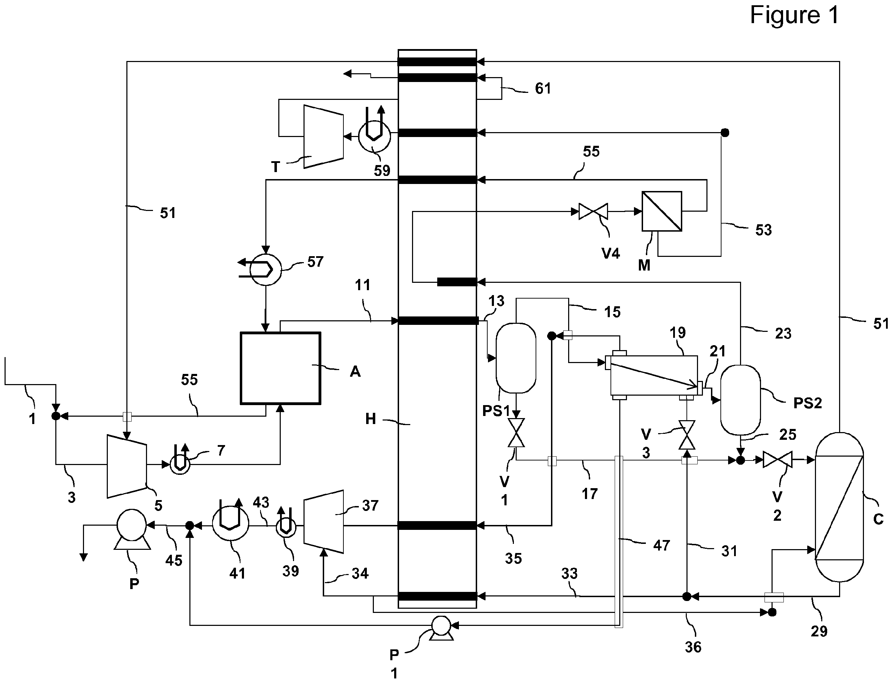

Dans la variante de la figure 1, l'appareil comprend un unique échangeur de chaleur multi-fluide, dit échangeur principal H. Le procédé n'est pas couvert par les revendications et représente une variante du procédé de WO2014/009643, avec deux séparateurs de phase et une colonne, plutôt qu'un seul séparateur de phase.

Un mélange gazeux 1 contenant du dioxyde de carbone, de l'humidité et au moins un autre gaz, choisi dans la liste : hydrogène, azote, oxygène, argon, monoxyde de carbone est mélangé avec un gaz 55 et envoyé comme mélange 3 à un compresseur 5. Après avoir été refroidi par le refroidisseur 7, le mélange est épuré en eau par l'unité d'adsorption A pour former le débit séché 11. Le débit séché 11 se condense partiellement dans l'échangeur H et est envoyé comme débit 13 au séparateur de phases PS1.

Le premier système opérant à basse température comprend ici deux séparateurs de phases PS1 et PS2, ainsi qu'une colonne de strippage C. Le gaz du premier séparateur de phases PS1 est refroidi dans un échangeur de chaleur 19 et se condense partiellement pour former le débit 21. Le débit 21 est envoyé au deuxième séparateur de phases PS2. Le liquide 17 détendu dans la vanne V1 provenant du séparateur PS1 et le liquide 25 sont mélangés, le liquide mélangé est détendu dans la vanne V2 et envoyé en tête de la colonne C.

Le gaz de tête 51 de la colonne se réchauffe dans l'échangeur de chaleur H et est recomprimé dans le compresseur 5 avec le débit 3. Le liquide de cuve 29 de la colonne C est divisé en deux. Une partie 33 se vaporise dans l'échangeur de chaleur H et est divisée en deux. Une partie 34 est envoyée à un compresseur 37, est refroidi par le refroidisseur 39 pour former le débit 43, est condensé par le refroidisseur 41 et ensuite pompé par la pompe P pour former un produit liquide sous pression riche en dioxyde de carbone.

Le reste 36 du débit 33, chauffé jusqu'au bout chaud de l'échangeur est renvoyé à la colonne C en cuve, sans avoir été refroidi.

Le débit 31 de liquide de cuve se réchauffe dans l'échangeur 19 après détente dans une vanne V3 et est pompé dans une pompe P1 avant d'être mélangé avec le débit 43 pour former le débit 45 à pressuriser dans la pompe P jusqu'à une pression prédéterminée.

Le gaz de tête 23 du séparateur de phases PS2 est enrichi en gaz non-condensables, par exemple hydrogène, monoxyde de carbone, azote, argon ou oxygène.

Ce gaz est réchauffé dans l'échangeur de chaleur H jusqu'à une température intermédiaire de celui-ci. Les lignes en gras de la figure représentent des débits qui se réchauffent ou se refroidissent dans l'échangeur et les lignes simples représentent une conduite du débit ne passant pas dans l'échangeur de chaleur.

Le gaz partiellement réchauffé 23 est détendu dans une vanne V4 et envoyé à un système membranaire, comportant dans ce cas une membrane M produisant un perméat 55 et un non-perméat 53. Le non-perméat 53 sera fortement réchauffé avant d'être envoyé à l'atmosphère. Le non-perméat 53 peut être détendu dans une turbine T après réchauffage dans un réchauffeur 59, le débit détendu 61 étant ensuite réchauffé dans l'échangeur de chaleur.

Par ce moyen le débit alimentant le système membranaire M est à une température inférieure à -10°C.

L'inconvénient d'une telle configuration réside principalement dans l'absence de régulation précise de la température en entrée des membranes du fait de la sortie intermédiaire de l'échangeur, en particulier lors des phases transitoires de fonctionnement (démarrage, montée ou baisse de charge ou même fluctuation de composition des fumées traitées).

De plus, il est nécessaire de réaliser une descente en froid des membranes très progressive lors des démarrages à chaud pour des problématiques d'intégrité mécanique des matériaux des membranes. Le schéma avec sortie intermédiaire ne permet une telle descente en froid. En effet, lors du démarrage à chaud les membranes sont à température ambiante et le gaz qui va leur être directement envoyé sera déjà à basse température.

Une solution apportée est illustrée dans la Figure 2 et consiste à séparer en deux le gaz à envoyer aux membranes, une première part 24 est entièrement réchauffée dans l'échangeur principal H jusqu'au bout chaud et la seconde 26 est mélangée avec ce gaz réchauffé. Grâce à une vanne de contrôle V5 sur le débit 26, la régulation de débit froid permet de réguler la température du mélange et donc la température en entrée du système membranaire M.

Concernant le démarrage des membranes, la procédure de démarrage préconisée implique des modifications de l'appareil, telles qu'illustrées dans la Figure 3. Ici la Figure 2 a été modifiée en rajoutant une conduite 62 en pointillés reliant le point de mélange des débits 24 et 26 au débit 55 du perméat, à travers une vanne V7. Une conduite 63 relie ce même point de mélange au débit 53 de non-perméat, à travers la vanne V8.

De plus une conduite 67 avec une vanne V9 permet de contourner la turbine T.

Afin de démarrer le procédé, selon une première phase :
- la vanne de gaz V5 envoyant directement le gaz froid 26 aux membranes M est fermée, tout le gaz est réchauffé dans l'échangeur H via la conduite 24.
- la vanne V6 en entrée des membranes M est fermée car les membranes ne sont pas encore démarrées.
- le gaz 24 réchauffé dans l'échangeur de chaleur H est alors séparé en deux parties 62,63 :
- une première partie 62 du gaz réchauffé 24 circule dans un premier circuit de contournement (régulé par une première vanne de contournement V7) des membranes M vers la passe censée recevoir le perméat 55 des membranes M : en effet, le perméat 55 pouvant être utilisé pour régénérer les sécheurs A de l'unité, un débit est nécessaire pour assurer cette régénération. Ainsi le débit 62 remplace le perméat 55. L'ouverture de la vanne V7 est réglée pour laisser passer le débit nominal de perméat 55 de membrane M. La vanne V7 peut être remplacée par plusieurs vannes en parallèle pour permettre une plus grande variation de débit.
- une seconde partie 63 du gaz réchauffé 24 circule dans un deuxième circuit de contournement (régulé par une vanne V8) qui envoie le reste 63 du gaz vers l'atmosphère optionnellement en passant par l'échangeur H et/ou par la ou les turbine(s) T. Dans ce dernier cas, le débit étant plus important que le débit nominal de la ou les turbine(s) T, un circuit de contournement V9, 67 de la ou les turbine(s) est requis si celles-ci n'ont pas été dimensionnées pour traiter ce débit supplémentaire. De même la passe concernée dans l'échangeur H qui mène vers la turbine T devra être dimensionnée pour traiter ce débit supplémentaire. Une autre option consiste à démarrer la ou les turbine(s) T uniquement après le démarrage complet des membranes. La ou les turbines sont entièrement contournées via la vanne V9 dans ce cas.

Selon une deuxième phase :
- On va progressivement ouvrir la vanne V6 en entrée des membranes M et progressivement fermer la vanne V8, la vanne V5 restant fermée. Du gaz chaud va alors être envoyée aux membranes M. Un gaz va commencer à traverser la membrane et à former le perméat 55.
   ∘ La vanne V7 va devoir se fermer légèrement pour assurer le même débit pour la régénération des sécheurs A de l'unité
   ∘ Progressivement le débit 61 envoyé à l'air va diminuer du fait de la perméation du CO₂ et de sa condensation partielle, on va pouvoir fermer la vanne V9 de contournement de la turbine T.
- On va continuer cette procédure jusqu'à ce que la vanne V6 en entrée des membranes M soit intégralement ouverte. Les membranes étant moins performantes à chaud, le débit et la composition du perméat 55 et du résidu 53 des membranes seront différents de leurs valeurs nominales. Les deux vannes V7,V8 sont donc encore partiellement ouvertes.
- On va pouvoir ouvrir progressivement la vanne V5 de gaz froid 26 devant être envoyé aux membranes, sans avoir été réchauffé. Le gaz en entrée des membranes M va donc se refroidir : on amorce la descente en froid des membranes. Les vannes V7, V8 vont devoir se fermer progressivement car les performances des membranes M vont s'améliorer.
- La procédure s'arrête quand la température en entrée des membranes M est la température nominale permettant aux membranes d'être optimales et donc de fermer les deux vannes V7, V8.
- Il est particulièrement important de maîtriser la descente en froid des membranes M pour que les contraintes mécaniques ne soient pas trop importantes. Une vitesse comprise entre 0.2 et 0.5°C par minute est recommandée dans ce cas.

Ce système permet aussi en opération normale de contrôler la température des membranes M afin de contrôler leur performance y compris après une dégradation normale due à leur durée de vie.

Il sera compris que les procédés de régulation décrits s'appliquent à différents procédés de séparation impliquant une étape de perméation à température inférieure à -10°C.

En particulier la présence d'une colonne de séparation n'est pas essentielle, ni la présence de deux séparateurs de phase.

Le produit enrichi en dioxyde de carbone peut être un produit gazeux ou liquide ou les deux et peut être sous pression ou pas.

## Revendications

1. Procédé de séparation d'un mélange (1) contenant du dioxyde de carbone, dans lequel :
i) le mélange (1) est refroidi dans un échangeur de chaleur (H) et partiellement condensé et un premier liquide (17) est séparé du mélange dans un premier système opérant à basse température comprenant au moins un premier séparateur de phases (PS1) et éventuellement une colonne de séparation (C) du liquide provenant du séparateur de phases et
ii) un gaz (23) issu du premier système est traité dans un système membranaire (M) pour produire un perméat (55) et un non-perméat (53), le gaz issu du premier système étant divisé en deux parties, une première partie (26) étant envoyée au système membranaire sans avoir été réchauffée et une deuxième partie (24) étant réchauffée dans l'échangeur de chaleur jusqu'à au moins une température intermédiaire de l'échangeur de chaleur, de préférence jusqu'au bout chaud de celui-ci et ensuite envoyée au système membranaire sans avoir été refroidie.

2. Procédé selon la revendication 1 dans lequel le mélange est épuré par adsorption dans une unité d'adsorption (A) en amont de l'échangeur de chaleur et lors d'une première phase, qui est une phase de démarrage, au moins une partie du gaz issu du premier système est envoyée à l'unité d'adsorption comme gaz de régénération et aucune partie du gaz issu du premier système n'est envoyée au système membranaire (M) et lors d'une phase ultérieure, qui est une phase d'opération suivant la phase de démarrage, au moins une partie du gaz issu du premier système est envoyée au système membranaire et au moins une partie du perméat ou du non-perméat du système membranaire est envoyée à l'unité d'adsorption comme gaz de régénération.

3. Procédé selon la revendication 2 dans lequel lors d'une deuxième phase, qui est une phase de démarrage, suivant la première phase, une partie du gaz issu du premier système est réchauffée et puis envoyée au système membranaire (M) et au moins une partie du perméat ou du non-perméat du système membranaire ainsi qu'une partie du gaz issu du premier système sont envoyées à l'unité d'adsorption (A) comme gaz de régénération

4. Procédé selon la revendication 1, 2 ou 3 dans lequel lors d'une première phase, qui est une phase de démarrage, au moins une partie du gaz issu du premier système est envoyée à l'atmosphère et aucune partie du gaz issu du premier système n'est envoyée au système membranaire (M) et lors d'une phase ultérieure, qui est une phase d'opération stable, au moins une partie du gaz issu du premier système est envoyée au système membranaire et au moins une partie du perméat ou du non-perméat du système membranaire est envoyée à l'atmosphère.

5. Procédé selon la revendication 4 dans lequel lors de la première phase, au moins une partie du gaz issu du premier système est détendue dans une turbine (T) et ensuite envoyée à l'atmosphère et lors de la phase ultérieure, au moins une partie du non-perméat est détendue dans une turbine et ensuite envoyée à l'atmosphère.

6. Procédé selon la revendication 5 dans lequel lors de la première phase, une première partie du gaz issu du premier système est détendue dans la turbine et ensuite envoyée à l'atmosphère et une deuxième partie du gaz issu du premier système est détendue dans un moyen de détente autre que la turbine et ensuite envoyée à l'atmosphère.

7. Procédé selon la revendication 4, 5 ou 6 dans lequel lors d'une deuxième phase, qui est une phase de démarrage, suivant la première phase, une partie du gaz issu du premier système est réchauffée et puis envoyée au système membranaire (M) et un autre partie du gaz issu du premier système est envoyée à l'atmosphère, éventuellement après détente dans une turbine (T).

8. Appareil de séparation d'un mélange (1) contenant du dioxyde de carbone, comprenant :
i) Une unité de séchage par adsorption (A)
ii) Un échangeur de chaleur (H)
iii) Un premier système de séparation capable d'opérer à une température inférieure à -10°C comprenant au moins un premier séparateur de phases (PS1) et éventuellement une colonne de séparation (C) reliée pour recevoir un liquide du premier séparateur de phases
iv) Une conduite pour envoyer un mélange (1) séché dans l'unité de séchage par adsorption se refroidir dans l'échangeur de chaleur pour former un débit partiellement condensé
v) Une conduite (13) pour envoyer le débit partiellement condensé de l'échangeur de chaleur vers le premier système de séparation
vi) Un système membranaire (M)
vii) Une conduite pour sortir un débit (29) enrichi en dioxyde de carbone du premier système de séparation sous forme liquide
viii) Une conduite pour envoyer un gaz (23) issu du premier système au système membranaire
ix) Une conduite pour sortir un perméat (55) du système membranaire et une conduite pour sortir un non-perméat (53) du système
dans lequel la conduite pour envoyer le gaz issu du premier système au système membranaire est reliée à l'échangeur de chaleur afin de permettre une partie (24) du gaz de se réchauffer jusqu'à au moins une température intermédiaire de l'échangeur de chaleur, de préférence jusqu'au bout chaud de celui-ci, avant d'être envoyée au système membranaire, le système membranaire étant relié au premier système par une autre conduite permettant d'envoyer une autre partie (26) du gaz au système membranaire sans avoir été réchauffée dans l'échangeur de chaleur.

9. Appareil selon la revendication 8 comprenant des moyens pour envoyer au moins une partie du gaz issu du premier système directement à l'atmosphère, éventuellement après détente.

10. Appareil selon la revendication 8 ou 9 comprenant des moyens pour envoyer au moins une partie du gaz issu du premier système à l'unité de séchage (A) comme gaz de régénération.

11. Appareil selon la revendication 8, 9 ou 10 comprenant une turbine et des moyens pour envoyer au moins une partie du gaz issu du premier système se détendre dans la turbine.

12. Appareil selon la revendication 8, 9, 10 ou 11 comprenant une turbine et des moyens pour envoyer au moins une partie du non-perméat se détendre dans la turbine.

13. Appareil selon l'une des revendications 11 ou 12 comprenant des moyens (67) pour contourner la turbine.

## Patentansprüche

1. Abscheideverfahren eines Gemisches (1), das Kohlendioxid enthält, wobei:
i) das Gemisch (1) in einem Wärmeaustauscher (H) gekühlt und teilweise kondensiert wird und eine erste Flüssigkeit (17) von dem Gemisch in einem ersten System abgeschieden wird, das bei niedriger Temperatur arbeitet, umfassend mindestens einen ersten Phasenabscheider (PS1) und gegebenenfalls eine Abscheidungssäule (C) der Flüssigkeit aus dem Phasenabscheider und
ii) ein Gas (23) aus dem ersten System in einem Membransystem (M) behandelt wird, um ein Permeat (55) und ein Nicht-Permeat (53) herzustellen, wobei das Gas aus dem ersten System in zwei Teile geteilt wird, wobei ein erster Teil (26) dem Membransystem zugeführt wird, ohne erwärmt worden zu sein, und ein zweiter Teil (24) in dem Wärmeaustauscher auf mindestens eine Zwischentemperatur des Wärmeaustauschers, bevorzugt bis zu dessen heißem Ende, erwärmt und dann dem Membransystem zugeführt wird, ohne gekühlt worden zu sein.

2. Verfahren nach Anspruch 1, wobei das Gemisch durch Adsorption in einer Adsorptionseinheit (A) stromaufwärts des Wärmeaustauschers und in einer ersten Phase, die eine Anlaufphase ist, gereinigt wird, mindestens ein Teil des Gases aus dem ersten System als Regenerationsgas der Adsorptionseinheit zugeführt wird und kein Teil des Gases aus dem ersten System dem Membransystem (M) zugeführt wird und in einer späteren Phase, die eine Betriebsphase nach der Anlaufphase ist, mindestens ein Teil des Gases aus dem ersten System dem Membransystem zugeführt wird und mindestens ein Teil des Permeats oder des Nicht-Permeats des Membransystems als Regenerationsgas der Adsorptionseinheit zugeführt wird.

3. Verfahren nach Anspruch 2, wobei in einer zweiten Phase, die eine Anlaufphase ist, nach der ersten Phase ein Teil des Gases aus dem ersten System erwärmt und dann dem Membransystem (M) zugeführt wird und mindestens ein Teil des Permeats oder des Nicht-Permeats des Membransystems, sowie ein Teil des Gases aus dem ersten System der Adsorptionseinheit (A) als Regenerationsgas zugeführt werden

4. Verfahren nach Anspruch 1, 2 oder 3, wobei in einer ersten Phase, die eine Anlaufphase ist, mindestens ein Teil des Gases aus dem ersten System der Atmosphäre zugeführt wird und kein Teil des Gases aus dem ersten System dem Membransystem (M) zugeführt wird und in einer späteren Phase, die eine stabile Betriebsphase ist, mindestens ein Teil des Gases aus dem ersten System dem Membransystem zugeführt wird und mindestens ein Teil des Permeats oder des Nicht-Permeats des Membransystems der Atmosphäre zugeführt wird.

5. Verfahren nach Anspruch 4, wobei in der ersten Phase mindestens ein Teil des Gases aus dem ersten System in einer Turbine (T) entspannt und dann der Atmosphäre zugeführt wird und in der späteren Phase mindestens ein Teil des Nicht-Permeats in einer Turbine entspannt und dann der Atmosphäre zugeführt wird.

6. Verfahren nach Anspruch 5, wobei in der ersten Phase ein erster Teil des Gases aus dem ersten System in der Turbine entspannt und dann der Atmosphäre zugeführt wird und ein zweiter Teil des Gases aus dem ersten System in einem anderen Entspannungsmittel als der Turbine entspannt und dann der Atmosphäre zugeführt wird.

7. Verfahren nach Anspruch 4, 5 oder 6, wobei in einer zweiten Phase, die eine Anlaufphase ist, nach der ersten Phase ein Teil des Gases aus dem ersten System erwärmt und dann dem Membransystem (M) zugeführt wird und ein anderer Teil des Gases aus dem ersten System der Atmosphäre, gegebenenfalls nach Entspannung in einer Turbine (T), zugeführt wird.

8. Abscheideeinrichtung eines Gemisches (1), das Kohlendioxid enthält, umfassend:
i) Eine Einheit zur Trocknung durch Adsorption (A)
ii) Einen Wärmeaustauscher (H)
iii) Ein erstes Abscheidungssystem, das in der Lage ist, bei einer Temperatur unter -10 °C zu arbeiten, umfassend mindestens einen ersten Phasenabscheider (PS1) und gegebenenfalls eine angeschlossene Abscheidungssäule (C), um eine Flüssigkeit aus dem ersten Phasenabscheider aufzunehmen
iv) Eine Leitung zum Zuführen eines in der Einheit zur Trocknung durch Adsorption getrockneten Gemisches (1) zum Abkühlen in den Wärmeaustauscher, um einen teilweise kondensierten Durchsatz zu bilden
v) Eine Leitung (13) zum Zuführen des teilweise kondensierten Durchsatzes des Wärmeaustauschers zu dem ersten Abscheidungssystem
vi) Ein Membransystem (M)
vii) Eine Leitung zum Abführen eines mit Kohlendioxid angereicherten Durchsatzes (29) des ersten Abscheidungssystems in flüssiger Form
viii) Eine Leitung zum Zuführen eines Gases (23) aus dem ersten System zu dem Membransystem
ix) Eine Leitung zum Abführen eines Permeats (55) des Membransystems und eine Leitung zum Abführen eines Nicht-Permeats (53) des Systems,
wobei die Leitung zum Zuführen des Gases aus dem ersten System zu dem Membransystem mit dem Wärmeaustauscher verbunden ist, um zu ermöglichen, dass ein Teil (24) des Gases auf mindestens eine Zwischentemperatur des Wärmeaustauschers, bevorzugt bis zu dessen heißem Ende erwärmt wird, bevor es dem Membransystem zugeführt wird, wobei das Membransystem mit dem ersten System durch eine andere Leitung verbunden ist, die es ermöglicht, dem Membransystem einen anderen Teil (26) des Gases zuzuführen, ohne im Wärmeaustauscher erwärmt worden zu sein.

9. Einrichtung nach Anspruch 8, umfassend Mittel zum Zuführen mindestens eines Teils des Gases aus dem ersten System direkt in die Atmosphäre, gegebenenfalls nach Entspannung.

10. Einrichtung nach Anspruch 8 oder 9, umfassend Mittel zum Zuführen mindestens eines Teils des Gases aus dem ersten System zu der Trocknungseinheit (A) als Regenerationsgas.

11. Einrichtung nach Anspruch 8, 9 oder 10, umfassend eine Turbine und Mittel zum Zuführen mindestens eines Teils des Gases aus dem ersten System, um sich in der Turbine zu entspannen.

12. Einrichtung nach Anspruch 8, 9, 10 oder 11, umfassend eine Turbine und Mittel zum Zuführen mindestens eines Teils des Nicht-Permeats, um sich in der Turbine zu entspannen.

13. Einrichtung nach einem der Ansprüche 11 oder 12, umfassend Mittel (67) zum Umgehen der Turbine.

## Claims

1. Method for separating a mixture (1) containing carbon dioxide, wherein:
i) the mixture (1) is cooled in a heat exchanger (H) and partially condensed and a first liquid (17) is separated from the mixture in a first system operating at low temperature comprising at least one first phase separator (PS1) and possibly a column for separating (C) the liquid coming from the phase separator, and
ii) a gas (23) coming from the first system is processed in a membrane system (M) to produce a permeate (55) and a non-permeate (53), the gas coming from the first system being split into two portions, a first portion (26) being sent to the membrane system without having been reheated and a second portion (24) being reheated in the heat exchanger until at least one intermediate temperature of the heat exchanger, preferably until the hot end of it and then sent to the membrane system without having been cooled.

2. Method according to claim 1, wherein the mixture is purified by adsorption in an adsorption unit (A) upstream of the heat exchanger and during a first phase, which is a start-up phase, at least some of the gas coming from the first system is sent to the adsorption unit as a regeneration gas and none of the gas coming from the first system is sent to the membrane system (M) and during a subsequent phase, which is an operation phase following the start-up phase, at least some of the gas coming from the first system is sent to the membrane system and at least some of the permeate or of the non-permeate of the membrane system is sent to the adsorption unit as a regeneration gas.

3. Method according to claim 2, wherein during a second phase, which is a start-up phase, following the first phase, some of the gas coming from the first system is reheated and then sent to the membrane system (M) and at least some of the permeate or of the non-permeate of the membrane system as well as some of the gas coming from the first system are sent to the adsorption unit (A) as a regeneration gas.

4. Method according to claim 1, 2 or 3, wherein during a first phase, which is a start-up phase, at least some of the gas coming from the first system is sent to the atmosphere and none of the gas coming from the first system is not sent to the membrane system (M) and during a subsequent phase, which is a stable operation phase, at least some of the gas coming from the first system is sent to the membrane system and at least some of the permeate or of the non-permeate of the membrane system is sent to the atmosphere.

5. Method according to claim 4, wherein during the first phase, at least some of the gas coming from the first system is expanded in a turbine (T) and then sent to the atmosphere and during the subsequent phase, at least some of the non-permeate is expanded in a turbine and then sent to the atmosphere.

6. Method according to claim 5, wherein during the first phase, a first portion of the gas coming from the first system is expanded in the turbine and then sent to the atmosphere and a second portion of the gas coming from the first system is expanded in an expansion means other than the turbine and then sent to the atmosphere.

7. Method according to claim 4, 5 or 6, wherein during a second phase, which is a start-up phase, following the first phase, some of the gas coming from the first system is reheated and then sent to the membrane system (M) and another portion of the gas coming from the first system is sent to the atmosphere, possibly after expansion in a turbine (T).

8. Apparatus for separating a mixture (1) containing carbon dioxide, comprising:
i) A unit for drying by adsorption (A)
ii) A heat exchanger (H)
iii) A first separation system capable of operating at a temperature less than -10°C comprising at least one first phase separator (PS1) and possibly a separation column (C) connected to receive a liquid from the first phase separator
iv) A pipe for sending a mixture (1) dried in the unit for drying by adsorption to be cooled in the heat exchanger to form a partially condensed flow
v) A pipe (13) for sending the partially condensed flow from the heat exchanger to the first separation system
vi) A membrane system (M)
vii) A pipe for releasing a carbon dioxide-enriched flow (29) from the first separation system in liquid form
viii) A pipe for sending a gas (23) coming from the first system to the membrane system
ix) A pipe for releasing a permeate (55) from the membrane system and a pipe for releasing a non-permeate (53) from the system, wherein the pipe for sending the gas coming from the first system to the membrane system is connected to the heat exchanger in order to make it possible for some (24) of the gas to be reheated until at least one intermediate temperature of the heat exchanger, preferably until the hot end of it, before being sent to the membrane system, the membrane system being connected to the first system by another pipe making it possible to send another portion (26) of the gas to the membrane system without having been reheated in the heat exchanger.

9. Apparatus according to claim 8, comprising means for sending at least some of the gas coming from the first system directly to the atmosphere, possibly after expansion.

10. Apparatus according to claim 8 or 9, comprising means for sending at least some of the gas coming from the first system to the drying unit (A) as a regeneration gas.

11. Apparatus according to claim 8, 9 or 10, comprising a turbine and means for sending at least some of the gas coming from the first system to be expanded in the turbine.

12. Apparatus according to claim 8, 9, 10 or 11, comprising a turbine and means for sending at least some of the non-permeate to be expanded in the turbine.

13. Apparatus according to one of claims 11 or 12, comprising means (67) for bypassing the turbine.
